# EUROPEAN PATENT APPLICATION

(11) **EP 4 400 955 A1**
(43) Date of publication of application: **17.07.2024**
(21) Application number: 23151420.9
(22) Date of filing: 12.01.2023
(51) Int. Cl.: G06F 3/04812, G06F 3/0483, G06F 3/01

(54) **TOUCHLESS USER INTERFACE CONTROL METHOD FOR PRESENTATIONS**

(71) Applicant: AMERIA AG, 69124 Heidelberg (DE)
(72) Inventor: Yadack, Malcolm, 35043 Marburg (DE)
(74) Representative: Best, Bastian

(57) **Abstract**

A computer-implemented touchless user interface control method, the method comprising: displaying, using a first display means (200), a first scene (210) which is visually perceptible by a user person (400); displaying, using a second display means (300), a second scene (310) which is visually perceptible by at least one participant person (500), wherein optionally the second scene (310) at least partially corresponds to the first scene (210); providing, using an interface provision means (100), a spatial input area (120) serving as a spatial user interface enabling the user person (400) to provide touchless user input to the displayed first scene (210); observing, using at least one depth sensing device (110), the spatial input area (120) and capturing the touchless user input provided by the user person (400); and generating at least one control command based on the captured touchless user input and modifying the first scene (210) and second scene (310) in accordance with the at least one control command.

## Description

### TECHNICAL FIELD

The present invention generally relates to controlling a touchless user interface, and more particularly to a touchless user interface control method for providing user input to an essentially stationary display means. Further, the present invention relates to a touchless user interface control system providing a user with a touchless user interface. Further, the present invention relates to a data processing apparatus and to a computer program for carrying out the touchless user interface control method.

### BACKGROUND

Display means have nowadays become omnipresent in various areas of modern life. Examples include electronic display screens or electronic display projectors in public places which provide useful information to the user, e. g., in shopping malls, trade shows, train stations, airports, and the like, a field which is commonly termed "digital signage". Other examples include the use of said displays for presentations, lectures or the like. Presentations and lectures may be performed in private environments, such as at home using a large screen display, e.g., a television device. Also, presentations and lectures may be performed in public environments, e.g., in schools, universities and other educational institutions.

In most presentation applications it is desired to point at specific areas on the display in order to show the audience particularities of a displayed scene, e.g., by catching the attention of the audience to specific parts of a displayed scene. Further, in most presentation applications there may also be a need to control the displayed scene, e.g., by clicking to the next presentation slide of a displayed slide deck, or by freehand drawing on a presentation slide.

With respect to the first desire, i.e., pointing to specific areas, it is often not possible to conveniently use the hand or a telescopic rod for several reasons. On the one hand, the display is often too large for conveniently pointing by a user person's hand or by a telescopic rod, and on the other hand, pointing directly at specific areas of a displayed scene by a user's hand or by a telescopic rod forces the user to stand away from the audience and close to the display and also it forces the user to turn away from the audience since it is not possible to look at the audience and the display at the same time.

With respect to the second desire, i.e., controlling the displayed scene, there is also no convenient solution for the user. Often, the mouse or keyboard of a computer is used to control the displayed scene, which is not very convenient during a presentation.

An existing solution which tries to combine these two needs is the so-called presenter device which includes a laser pointer for pointing at specific areas of a scene, and physical buttons or touch buttons for controlling the displayed scene. Such presenter devices have various disadvantages.

Firstly, a laser pointer cannot be used to show something on every display, depending on the display type. For example, a generated dot of a laser pointer cannot be seen well on an LCD or LED display.

Secondly, the functionality of said physical buttons is often limited to "clicking" from one presentation slide to the next presentation slide of a slide deck. It is, e.g., generally not possible to provide freehand drawings on a presentation slide.

Thirdly, not least because of the recent COVID-19 pandemic, users have become hesitant to use physical control means when multiple people interact may use them. Therefore, physical buttons or touch buttons are not preferred.

Fourthly, as for presentations, a high precision of input is desirable which cannot be provided by said presenter devices. Rather, said presenter devices, first need to be aligned with the displayed scene by randomly activating the laser until seeing the laser dot and subsequently positioning the laser dot at a desired area on the displayed scene.

Fifthly, the usability of such presenter devices is not very high, especially since there are numerous different presenter devices with different key positions and key configurations, so that a user must first familiarize with them before starting a presentation. In other words, the user experience is not intuitive.

Therefore, there is a need to provide a method that fulfills at least partially said requirements and at the same time provides a positive user experience. Existing solutions are either not suitable for presentations or are not convenient due to non-intuitive control configurations.

It is therefore the technical problem underlying the present invention to provide an improved touchless user interface control method and thereby overcome the above-mentioned disadvantages of the prior art at least in part.

### SUMMARY OF INVENTION

The problem is solved by the subject-matter defined in the independent claims. Advantageous modifications of embodiments of the invention are defined in the dependent claims as well as in the description and the figures.

According to a first aspect of the present invention, a computer-implemented touchless user interface control method is provided. The method may comprise displaying, using a first display means, a first scene which is visually perceptible by a user person. The method may comprise displaying, using a second display means, a second scene which is visually perceptible by at least one participant person. The second scene at least partially may correspond to the first scene. The method may comprise providing, using an interface provision means, a spatial input area serving as a spatial user interface enabling the user person to provide touchless user input to the displayed first scene, in particular for interacting with the displayed second scene. The method may comprise observing, using at least one depth sensing device, the spatial input area and capturing the touchless user input provided by the user person. The method may comprise generating at least one control command based on the captured touchless user input and modifying the first scene and second scene in accordance with the at least one control command.

It may be provided that modifying includes modifying the first scene in accordance with the at least one control command, wherein the modifications applied to the first scene are at least partially also applied to the second scene. It may be provided that the first and second scene are modified correspondingly in accordance with the at least one control command, wherein the first and second scene are at least partially identical.

As described above, the starting point of the method according to the first aspect of the present invention is displaying, using a first display means, a first scene which is visually perceptible by a user person. Further, it is performed displaying, using a second display means, a second scene which is visually perceptible by at least one participant person, e.g., by an audience. In this setting, for example, the first display means may be understood to be the help screen of the user person who may be presenting content, and the second display means may be a participant display means which can be seen by participants of the presentation. It may be provided that the user person is essentially not able to see the second display means when he looks at the first display means. Further, it may be provided that the at least one participant person, e.g., an audience, may essentially not be able to see the first display means when looking at the second display means.

The first display means may be an essentially stationary display means such that the user person is spaced apart from said fist display means during the user person's presentation. This gives the user person the feeling of being in a classic presentation he is giving. For example, the user person can present while standing and has the first display means as a help screen spaced apart in front of the user person so that he can see the entire displayed first scene in an appropriate size, e.g., easily readable size. Examples for essentially stationary first display means are projector assemblies including a projector and a projection surface, electronic display screens such as LCD screens or LED screens, and holographic display means. An essentially stationary first display means may in particular be a large display means, for example having a display size of more than 25 inches, preferably more than 35 inches, preferably more than 45 inches, preferably more than 55 inches, preferably more than 70 inches, preferably more than 100 inches. A benefit of a large first display means is that due to the fact that it is spaced apart from the user person, the user person's line of sight is almost straight ahead, where the audience can be located, for example. He can thus keep the audience in the user person's field of view during the presentation and, in particular, maintain eye contact.

Further, in case if the second display means is an essentially stationary display means having a size such that an average user person is not able to reach every part of a displayed second scene using a hand for the purpose of pointing at a specific area of the scene, the present setting where the user person is able to see the first display means and control the second scene through controlling the first scene, as it is described further below, is particularly useful. The same applies to a case when the second display means is not in the same room as the first display means.

The second display means may be an essentially stationary display means such that the at least one participant person is spaced apart from said second display means during a presentation. This enables the method of the present invention to be suitable for presentations which can be seen by a plurality of participant persons in the same room at the same time. Such plurality of participant persons may be understood as an audience. Said essentially stationary display means may be placed in the back of a presenter person while looking at the first display means. In such setting, the user person is essentially not able to see the second display means when he looks at the first display means. Vice versa, the at least one participant person may be essentially not able to see the first display means when looking at the second display means. Examples for essentially stationary second display means are projector assemblies including a projector and a projection surface, electronic display screens such as LCD screens or LED screens, and holographic display means. An essentially stationary second display means may in particular be a large display means, for example having a display size of more than 70 inches, preferably more than 100 inches, preferably more than 130 inches, preferably more than 160 inches, preferably more than 200 inches, preferably more than 300 inches. A benefit of a large second display means is that a great number of participant persons may be able to see a displayed second scene.

In general, display means of big size are particularly advantageous for presentations. Therefore, a scene displayed by the first and/or second display means may for example include content such as presentation slides, photos, videos, text, diagrams, or the like. The display means, despite their bulky size, can be conveniently and intuitively operated by means of the present invention, which is described in more detail below.

The interface provision means may be understood as a device or assembly which is configured to provide the user person with a user interface which is a spatial user interface for interacting with a displayed scene which is displayed by a display means without requiring a physical touch, in particular for interacting with the first scene displayed by the first display means and/or with the second scene displayed by the second display means. The term touchless user interface and spatial user interface may therefore be understood as synonyms. For this purpose, the interface provision means may include at least one depth sensing device which observes a spatial input area which preferably builds the spatial user interface. Accordingly, the at least one depth sensing device may capture touchless user input provided by the user person within the spatial input area.

Preferably, the at least one depth sensing device may be integrated in the interface provision means, e.g., being arranged in a housing of the interface provision means or being mounted at a housing of the interface provision means. The interface provision means may be a physical device. Particular embodiments of interface provision means are described further below.

The term spatial input area may be understood as comprising or being a virtual plane defined in space which virtual plane may form a virtual touchpad which does not require physical touch during a user interaction. Alternatively or additionally, the term spatial input area may be understood as a space within which user interaction is captured, as described above. The spatial input area, preferably the virtual plane, may be essentially parallel to the first scene displayed by the first display means, preferably essentially parallel to the first display means. Alternatively or additionally, the spatial input area, preferably the virtual plane, may be tilted, i.e., inclined, with respect to the first scene displayed by the first display means, preferably tilted, i.e., inclined, with respect to the first display means. In case if the spatial input area, preferably the virtual plane, is tilted with respect to the first scene and/or the first display means, the spatial input area may have a spatial orientation that is particularly convenient for the user person for providing user input. It may be provided that the user person is provided with a control option to adjust the spatial orientation of the spatial input area.

Advantageously, the interface provision means may be configured to at least partially make the spatial input area in space recognizable for the user person. For this purpose, different types and shapes of interface provision means are possible, such as a physical framing wherein the framing delimits the spatial input area. Such physical framing may for example be called "airframe" because it delimits a space in the air in front of the user person which is meant to build the spatial user interface. Alternatively, the interface provision means may have two physical towers each delimiting the spatial input area from one opposing side, in other words, a physical framing with only a left and a right portion. The interface provision means, built as a physical framing or partial framing, may be mounted on a lectern and/or speakers desk, or be part of a lectern and/or speakers desk.

Alternatively, the interface provision means may be for example a laser projector or a holographic projector which indicates the spatial input area. Alternatively, the interface provision means may be an augmented reality device, such as an augmented reality glasses, which indicates to the user person where the spatial input area is located in space. Further details and embodiments are described further below.

The term touchless user input may include any touchless action performed by a user person intending to interact with a displayed scene. Touchless user input may be provided by a user person using an input object. The input object may be any kind of suitable input object such as a hand or a finger of a user person, a dedicated input device which may for example be a pen or a spherical device.

The interface provision means, preferably including the at least one depth sensing device, may be separate from the first and second display means, in particular being arranged separately. For example, the interface provision means may not have a physical contact with the first or second display means, e.g., with respect to their housings.

The interface provision means and the, preferably essentially stationary, first display means may be spaced apart from each other, e.g., in such manner that the user person is able to see the entire first scene which is displayed by the first display means essentially without moving the user person's body, in particular essentially without moving the user person's head, and/or in such manner that a different person may move between the interface provision means and the first display means, and/or is such manner that the distance between the interface provision means and the first display means is more than 1 meter, preferably more than 1,5 meters, preferably more than 2 meters, preferably more than 3 meters, preferably more than 4 meters, preferably more than 5 meters, preferably more than 7 meters, preferably more than 10 meters. Further, the interface provision means and the, preferably essentially stationary, second display means may be spaced apart from each other in the same manner.

The at least one depth sensing device may be a sensor device, a sensor assembly or a sensor array which is able to capture the relevant information in order to translate a movement and/or position and/or orientation of an input object, in particular of a user person's hand, into control commands. In particular, depth information may be capturable by the depth sensing device. It may be placed such as to observe the spatial input area. In a preferred embodiment, at least two depth sensing devices are provided and placed such as to observe the spatial input area. Preferably, if at least two depth sensing devices are used, the depth sensing devices may be arranged facing each other having an overlap in their field of view, each at least partially covering the spatial input area. The depth sensing device may preferably be a depth camera. An example for a depth camera is the Intel RealSense depth camera.

The at least one depth sensing device may, as described above, be part of the interface provision means or be integrated in the interface provision means or be mounted at the interface provision means. Therefore, also the at least one depth camera and the first and/or display means may be spaced apart from each other in the same manner as described above with respect to the interface provision means and the first and/or second display means.

The term control command may be understood as any command that may be derived from a user input. In particular, a control command may be generated based on a translation of a captured user input into a control command. Examples for control commands are "show hovering pointer which overlays the current scene" or "switch to the next page or slide in the presentation".

The term modifying the first displayed scene and second displayed scene may be understood as any modification of one or both displayed scene(s) which is caused by a captured user input, i.e., by generated control commands which were generated based on captured user input, as described above. Examples for modifications of a displayed scene are: Showing a hovering pointer which overlays a current scene; turning a page to the next one; switching from a currently shown slide to a next slide of a presentation; overlay a current scene with a freehand drawing; mark specific keywords; zoom in; zoom out; and the like. Modifying may be performed for the first scene displayed by the first display means and subsequently at least partially also performed for the second scene displayed by the second display means. Alternatively or additionally, the modification may be performed at both, the first and the second scene, at the same time and in the same manner. It may be provided that the first and second scene are identical, or that the second scene corresponds to a part of the first scene, for example if the first scene is a presenter mode of a presentation and the second screen is the actual presentation meant to be seen by at least one participant person. It may alternatively be provided that the first screen corresponds to a part of the second scene.

It may be provided that the spatial input area, preferably being defined as a virtual plane defined in space, is mapped to the first scene displayed by the first display means, wherein captured user input is mapped accordingly while modifying the first and second scene. Mapping may include projection and/or streaming at least parts of the first scene to the second scene.

It may be further provided that for modifying the second scene, the modification of the first scene is mapped to the second scene.

It may be provided that the spatial input area and captured user input which is performed within the spatial input area is mapped to the first scene and at least partially to the second scene. The spatial input area may be defined to be a virtual plane in space. The mapping may follow one or more rules.

In a first example, the spatial input area may have essentially the same width-to-height ratio as the first scene, and preferably as the first display means. Described in formulas, the width-to-height ratio of the spatial input area is r and the width-to-height ratio of the first scene and/or first display device is R1, with r = R1. In this example, the spatial input area may be mapped to the displayed scene and/or to the display means essentially without changing the width-to-height ratio. Further, it may be provided that the width-to-height ratio of the second scene, and preferably of the second display means, is also the same, such that r = R1 = R2. In this case, mapping from the spatial input area to the fist scene or mapping from the first scene to the second scene may be performed, wherein the width-to-height ratio remains unchanged, i.e., no distortions need to be performed.

In a second example, the spatial input area may have a different width-to-height ratio than the first scene, and preferably as the first display means. Described in formulas, the width-to-height ratio of the spatial input area is r and the width-to-height ratio of the first scene and/or first display means is R, with r ≠ R. In this example, mapping may follow underlying mapping rules which fit the different width-to-height ratios to one another in order to provide an optimum user experience. Further, it may be provided that the width-to-height ratio of the second scene, and preferably of the second display means, R2, is also different. It is possible that r # R1 and r # R2 and R1 # R2, wherein mapping may follow underlying mapping rules which fit the different width-to-height ratios to one another in order to provide an optimum user experience. Further, it is possible that r ≠ R1 and R1 = R2, wherein mapping from the spatial input area to the first scene may follow underlying mapping rules which fit the different width-to-height ratios to one another in order to provide an optimum user experience, but wherein the mapping from the first scene to the second scene may be performed without changing the width-to-height ratio. Further, it is possible that r = R1 and R1 ≠ R2, wherein mapping from the spatial input area to the first scene may be performed without changing the width-to-height ratio, but mapping from the first scene to the second scene may be performed following underlying mapping rules which fit the different width-to-height ratios to one another in order to provide an optimum user experience. Further, it is possible that r ≠ R1 and r = R2, wherein mapping from the spatial input area to the first scene may be performed following underlying mapping rules to provide an optimum user experience, while for the second scene, a direct mapping from the spatial input area without changing the width-to-height ratio is possible. Generally, each of the aforementioned examples may on the one hand comprise mapping from the spatial input area directly to the first and second scene, or may on the other hand comprise mapping from the spatial input area to the first scene and subsequent mapping from the first scene to the second scene.

It may be provided that the spatial input area is or comprises a virtual plane defined in space which virtual plan may form a virtual touchpad which does not require physical touch during a user interaction.

The virtual plane may have boundary limits which at least partially delimit the spatial input area. In particular, if the visual control aid, as described above, includes a visually perceptible virtual representation of the spatial input area, this virtual representation may consist of or comprise an illustration of said boundary limits.

The first and second display means may be connected with wires or wirelessly in order to communicate with each other. Additionally or alternatively, the interface provision means may be connected to the first and/or second display means in order to communicate with each other. The first display means and/or the second display means and/or the interface provision means may comprise a computer as a main processing unit for the present invention.

Generating at least one control command may be performed based on at least a part of the captured orientation and/or position and/or movement of an input object which the user uses for providing user input, in particular based on an underlying control scheme. The input object may for example be the user person's hand. Said control scheme may include information about which respective orientation and/or position and/or movement of the input object should be translated into which control commands.

It may be provided that the control scheme is predefined. Optionally, at least two control schemes are predefined and available for the user person to choose from. Alternatively or additionally, the control scheme may at least partially be adaptable by the user. By that, the control scheme can be tailored to the user person's needs, preferences and physical abilities, for example if the user person is handicapped. This increases the versatility of the present invention and creates a wide range of possible usage options.

It may be provided that the control commands include at least two control command types, preferably including hovering pointer commands and gesture input commands. These control command types are described in further detail below.

The present invention is applicable to various fields of application and is particularly advantageous for presenting content to participant persons and/or an audience. In particular, experience and testing have shown that the intuitively designed touchless user interface control method according to the present invention provides a particularly appealing and easy to learn user experience. Further, based on the at least one control command, pointing to specific areas on a scene as well as controlling a scene is combined in one single control scheme which is provided by the present invention. Especially for large screens, the present invention provides a high benefit over the prior art because even though the user person and the interface provision means are spaced apart from the display means, it is still possible to process user input. Due to the interface provision means that makes the spatial input area at least partially recognizable by the user person, the user experience is enhanced because this feature supports the user person during interaction and significantly reduces the need to become familiar with the control method in beforehand.

Generating at least one control command based on orientation and/or position and/or movement of an input object, e.g., a user person's hand, is particularly smooth and can be performed continuously without interruptions, jumps or leaps, if the input object is detected and successively tracked during a user interaction. In other words, an input object may be detected and the step of capturing user input may be locked to the detected input object. Thus, during an interaction of the user person, the input object or hand may move around and change continuously its position which may occasionally result in control interruptions and thus negatively affect the user experience. By detecting and tracking the input object, such interruptions are avoided for the benefit of the user experience. Once the input object is detected, losing or confusing the input object with other body parts or objects is efficiently avoided.

For detecting the input object and locking the input object for the purpose of capturing user input, a locking condition may be required to be met. Such locking condition may require the user person to perform a specific user input, such as a gesture, successive gestures, pressing a button, input voice commands and/or the like. For example, a detected hand of a user person may be initially displayed on the display means before the locking condition is met, so that the user person can easily see and decide whether the correct hand which is intended for interaction is detected and locked. Based on the initially displayed hand, the user person may perform a gesture, for example a double click gesture moving the hand back and forth, if such gesture is set to be the locking condition. After locking the input object or the hand, the at least one depth sensing device may seamlessly continue tracking the input object upon re-entering the input object into the spatial input area, after the input object was previously moved out of the spatial input area. This can be realized by detecting and processing at least partially the shape of the input object or by detecting and processing one or more characteristics of the user person's input object, e.g., hand.

It may be provided that the user person can choose between different locking conditions and/or define individual locking conditions. For example, old persons may not be able to perform certain gestures, such as fast double click gestures, due to handicaps. By the individualization option with respect to the association condition, the usability is enhanced.

It may be provided that the interface provision means comprises at least two depth sensing devices, each at least partially observing the spatial input area and capturing user input, wherein a combination of the captured data of the at least two depth sensing devices is performed in order to recognize the user input and to generate control command(s) based on the user input, optionally wherein the depth sensing devices are depth cameras.

Using at least two, preferably more than two depth sensing devices advantageously enhances the precision of capturing user input. This is due to the fact that each depth sensing device may observe at least part of the spatial input area, i.e., some parts of the spatial input area may be even observed by more than one depth sensing device. The captured image data from different depth sensing devices may be overlayed, i.e., merged together in order to get a high resolution of captured user input in the spatial input area.

It may be further provided that during a user interaction where touchless user input is captured which is provided by the user person via an input object, preferably via a hand of the user person, the captured distance of the input object with respect to the virtual plane and the position of the input object relative to the plane and/or the movement of the input object relative to the plane is processed and generating at least one control command is performed based thereon.

It may be provided that one or more of the following types of control commands may be generated based on user input: hovering pointer commands causing modifying the first and second scene by displaying a hovering pointer which overlays the respective scene in a respective position, preferably wherein a captured user input is determined to be a hovering pointer command if the user points with at least a portion of the user person's hand within the spatial input area; gesture input commands, such as click input commands, causing modifying the first and second scene in that said scenes change according to the gesture, preferably wherein a captured user input is determined to be a gesture input command if the user performs a gesture movement with the user person's hand within the spatial input area.

The types of control commands may be defined in a control scheme, as described above. In particular, said control scheme may include information about which respective orientation and/or position and/or movement of the input object should be translated into which control commands. It may be provided that the control scheme is predefined. Optionally, at least two control schemes are predefined and available for the user person to choose from. Alternatively or additionally, the control scheme may at least partially be adaptable by the user person.

One example for a user input which causes generating a hovering pointer command is that the input object is moved with respect to the spatial input area while essentially not penetrating more than a threshold value in the direction perpendicular to a virtual plane of the spatial input area and/or in the direction perpendicular to the scene displayed by the display means.

One example for a user input which causes generating a gesture input command being a click input command is that the input object is moved in the direction perpendicular to a virtual plane of the spatial input area and/or in the direction perpendicular to the scene displayed by the display means wherein the movement exceeds a threshold. Preferably, also a double click input command may be provided by performing said movement twice within a predefined time period.

As described above, the spatial input area, preferably the virtual plane, may be essentially parallel to the first scene and/or to the first display means. Alternatively or additionally, the spatial input area, preferably the virtual plane, may be tilted, i.e., inclined, with respect to the first scene displayed by the first display means, preferably tilted, i.e., inclined, with respect to the first display means. In case if the spatial input area, preferably the virtual plane, is tilted with respect to the first scene and/or the first display means, the spatial input area may have a spatial orientation that is particularly convenient for the user person for providing user input. Thus, it may be provided that the user person is provided with a control option to adjust the spatial orientation of the spatial input area. Said control option may be provided by the interface provision means and/or by at least one of the at least one depth camera(s), e.g., by providing a physical button or touch button or by providing predefined gestures which the user person may perform in order to change the spatial orientation of the spatial input area. Further, it may be provided that the above-mentioned hovering input command(s) and gesture input command(s) are automatically adjusted depending on the spatial orientation of the spatial input area. In other words, it may be provided that the spatial orientation of the spatial input area, preferably being a virtual plane in space, is adjustable by the user person, wherein capturing user input and/or generating at least one control command is performed considering the spatial orientation of the spatial input area.

It may be provided that the position of the spatial input area in space is at least partially made recognizable for the user person through the interface provision means.

It may be provided that the at least one depth sensing device is integrated in the interface provision means.

It may be provided that the interface provision means is or comprises a physical framing having a shape that at least partially frames the spatial input area, optionally wherein the physical framing comprises an essentially vertical left tower and an essentially vertical right tower, the left and the right tower opposing each other such that the spatial input area is located between the left tower and the right tower, wherein at least one depth sensing device may be integrated in the left tower and/or at least one depth sensing device may be integrated in the right tower. The term tower may be understood as a vertically elongated structure.

By means of said framing, the spatial input area may inherently be made at least partially recognizable for the user person. The physical framing can be shaped as a window frame, with only air between the frame parts. Such a physical framing can be called, for example, "airframe". Of course, one or more side parts of such framing shaped as a window frame may be omitted in order prevent the user person from bumping into unnecessary side parts and negatively affecting or limiting the user person's freedom to move when performing user input.

The term tower may be understood as a vertically elongated structure. In particular, echoing the above-mentioned physical framing having the shape of a window, the essentially vertical left tower and the essentially vertical right tower may be a left and right part of such framing. Said physical framing, independent of a specific shape, may be part or may be mountable on a lectern and/or speaker's desk and/or table desk.

The embodiment of the physical framing comprising an essentially vertical left tower and an essentially vertical right tower is, according to various testing, found particularly convenient to use in terms of freedom to move while providing user input, at the same time providing enough indication for a user person in order to recognize where the spatial input area is located and how the spatial input area is oriented in space. As described further above, the orientation of the spatial input area may be adjustable by the user person. In other words, the interface provision means and/or at least one of the at least one depth camera(s) may provide a control option to the user person for adjusting the spatial orientation of the spatial input area. For example, the control option may be realized by providing a physical button or touch button or by providing predefined gestures which the user person may perform in order to change the spatial orientation of the spatial input area. Accordingly, it may be provided that the position and/or orientation of the interface provision means, in particular of the physical framing, is automatically adjusted depending on the spatial orientation of the spatial input area. In other words, it may be provided that the spatial orientation of the spatial input area, preferably being a virtual plane in space, is adjustable by the user person, wherein adjusting the position and/or orientation of the interface provision means, in particular of the physical framing, is performed under consideration of the spatial orientation of the spatial input area. The adjustment of the position and/or orientation of the interface provision means, in particular of the physical framing may be possible manually by the user person and/or automatically. The interface provision means, in particular the physical framing may therefore include adjustment means, e.g., a tilting joint and/or a hinge.

It may be provided that the interface provision means comprises a projector, preferably a laser projector and/or a hologram projector, the projector emitting light at least partially being indicative of the location, e.g., position and orientation, of the spatial input area.

As described above, the spatial orientation of the spatial input area may be adjustable. In this case, also the projector may be configured to accordingly adjust the position and/or orientation of the emitted light that is indicative of the location, e.g., position and orientation, of the spatial input area.

It may be provided that the interface provision means comprises an augmented reality device, preferably a wearable augmented reality device such as an augmented reality glasses, the augmented reality device providing an indication to the user person at least partially being indicative of the location, e.g., position and orientation, of the spatial input area.

As described above, the spatial orientation of the spatial input area may be adjustable. In this case, also the augmented reality device may be configured to accordingly adjust the indication that is indicative of the location, e.g., position and orientation, of the spatial input area.

It may be provided that the interface provision means, preferably including the at least one depth sensing device, is operable in a sleep-mode and in an active-mode, wherein in the sleep-mode, the interface provision means is at least partially deactivated in order to save energy and switches into the active-mode in response to a wakeup user action, optionally wherein the interface provision means automatically switches from the active-mode into the sleep-mode after a predetermined time period of inactivity and/or in response to a sleep user action.

It may be provided that the interface provision means comprises an assisting display, the assisting display displaying, a visual control aid being visually perceptible by the user person, wherein the visual control aid provides the user person with an indication of captured user input, optionally wherein the visual control aid is a representation of the user person's hand that the user person uses for providing user input.

The assisting display may be an additional display, further to the first display means, which assists the user person during a presentation which can be seen by an audience on the second display means. The assisting display may preferably be the electronic display of a mobile device which is used as an assisting device. Said mobile device may be placed into a holding structure of the interface provision means, e.g., if the interface provision means is part of or mounted on a table, a lectern, a speaker's desk or the like. The holding structure may be configured to facilitate a predefined positioning of the mobile device with respect to the interface provision means and/or with respect to the first and/or second display means.

The visual control aid may be displayed on said assisting display, in particular on said electronic display of a mobile device. The visual control aid may include a visual indication of the approximate position of the input object and/or the approximate direction in which the input object points.

Said visual indication of the approximate position and/or pointing direction of the input object may be implemented in various forms. In a first example, the visual indication may be a dot shown on the assisting display, wherein the dot moves on the assisting display to indicate the position of the input object and/or wherein the dot changes its shape to indicate the direction in which the input object points. The change in shape may, e.g., include a small arrow or triangle in the middle of the dot or on one side of the dot which corresponds to the direction in which the input object points. In a second example, the visual indication may be a triangle or arrow, wherein the triangle or arrow moves on the assisting display to indicate the position of the input object, and/or wherein the triangle or arrow changes its pointing direction to indicate the direction in which the input object points.

The visual control aid may include a visually perceptible virtual representation, preferably illustration, of the input object that the user person uses for providing user input, optionally wherein the input object is a user person's hand and the virtual representation having the shape of a hand.

For this purpose, for example, the input object may be rendered and displayed by the assisting display corresponding to the real input object. In case that the input object is a user person's hand, the shape of the hand may be rendered and displayed by the assisting display. The virtual representation of the input object may preferably be a 3D-illustration. This is particularly easy to understand also for unexperienced user persons and therefore provides an intuitive user experience.

The visual control aid may include a visually perceptible virtual representation of the spatial input area, wherein the approximate position of the input object and/or the approximate direction in which the input object points is indicated with respect to the virtual representation of the spatial input area.

An example for such visually perceptible virtual representation of the spatial input area is a 3D-plane which is shown on the assisting display. Such 3D-plane may have for example a square or rectangular shape. The 3D-plane may further be shown as a grid in order to visualize the spatial input area more clearly.

The assisting display may display a scene which essentially corresponds, preferably which is identical, to the first scene displayed by the essentially stationary first display means.

Of course, the scene displayed by the first display means may for example be a stream of the scene displayed by the assisting display. Thus, the scene displayed on the assisting display and the first scene displayed on the first display means may be the same. In this case, the above-mentioned visual indication and/or virtual representation of the input object and/or the virtual representation of the spatial input area may overlay the scene displayed on the assisting display.

It may be provided that the above-mentioned visual indication and/or virtual representation of the input object and/or the virtual representation of the spatial input area are only shown on the assisting display and not shown by the first or second display means. Instead, it may be provided that while the assisting display shows the above-mentioned visual indication and/or virtual representation of the input object and/or the virtual representation of the spatial input area, the first and/or display means show(s) the respective first and/or second scene and an overlaying pointer, i.e., cursor. The position and/or shape and/or color of the overlaying pointer, i.e., cursor may be dependent on the user input, i.e., the generated control commands and thus be in analogy to the visual indication and/or virtual representation of the input object and/or the virtual representation of the spatial input area which are only shown on the assisting display.

According to a second aspect of the present invention, a touchless user interface control system, in particular for use in a method according to the first aspect of the present invention, may be provided. The system may comprise a first display means being configured to display a first scene, the first display means being arranged such that a user person is able to visually perceive the first scene. The system may comprise at least one second display means being configured to display a second scene, the at least on second display means being arranged such that at least one participant person is able to visually percept the second scene, preferably wherein the user person is not able to see the second scene. The system may comprise an interface provision means configured to provide spatial input area serving as a spatial user interface enabling the user person to provide touchless user input to the displayed first and/or second scene. The system may comprise at least one depth sensing device, preferably mounted at or integrated in the interface provision means, being configured for observing a spatial input area and capturing touchless user input performed by the user person. It may be provided that the interface provision means comprises an interface indication means being configured to provide an indication to the user person at least partially being indicative of the location of the spatial input area, wherein the interface indication means preferably includes one or more of the following:
a physical framing having a shape that at least partially frames the spatial input area, preferably an essentially vertical left tower and an essentially vertical right tower, wherein the left and the right tower oppose each other such that the spatial input area is located between the left tower and the right tower, preferably wherein in each of the towers at least one of the at least two depth sensing devices may be mounted or integrated;
a projector, preferably a laser projector and/or a hologram projector, the projector emitting light at least partially being indicative of the location of the spatial input area,
an augmented reality device, preferably a wearable augmented reality device such as an augmented reality glasses, the augmented reality device providing an indication to the user at least partially being indicative of the location of the spatial input area.
optionally an assisting display being configured for displaying a visual control aid being visually perceptible by the user person, wherein the visual control aid provides the user person with an indication of captured user input, wherein the visual control aid may be a representation of the user person's hand that the user person uses for providing user input.

According to a third aspect of the present invention, a system or data processing apparatus is provided, comprising means for carrying out the method according to the first aspect of the present invention.

According to a fifth aspect of the present invention, a use of at least two depth sensing devices, preferably at least two depth cameras, in a computer-implemented method according to the first aspect of the present invention, is provided.

According to a sixth aspect of the present invention, a computer program or a computer-readable medium is provided, having stored thereon a computer program, the computer program comprising instructions which, when the program is executed by a computer, cause the computer to carry out the method according to the first aspect of the present invention.

All technical implementation details and advantages described with respect to the first aspect of the present invention are self-evidently mutatis mutandis applicable for the second, third, fourth, fifth and sixth aspects of the present invention and vice versa.

### BRIEF DESCRIPTION OF THE DRAWINGS

The disclosure may be better understood by reference to the following drawings:
- Fig. 1a:: A first schematic illustration of a touchless user interface control system according to embodiments of the present invention.
- Fig. 1b:: A second schematic illustration of a touchless user interface control system according to embodiments of the present invention.
- Fig. 2a:: A first schematic illustration of an interface provision means according to embodiments of the present invention.
- Fig. 2b:: A second schematic illustration of an interface provision means according to embodiments of the present invention.
- Fig. 3:: A third schematic illustration of an interface provision means according to embodiments of the present invention.
- Fig. 4a:: A fourth schematic illustration of an interface provision means according to embodiments of the present invention.
- Fig. 4b:: A fifth schematic illustration of an interface provision means including a user person providing touchless user input according to embodiments of the present invention.
- Fig. 5a:: A sixth schematic illustration of an interface provision means according to embodiments of the present invention.
- Fig. 5b:: A seventh schematic illustration of an interface provision means including a user person providing touchless user input according to embodiments of the present invention.
- Fig. 6:: An eighth schematic illustration of an interface provision means according to embodiments of the present invention.

### DETAILED DESCRIPTION

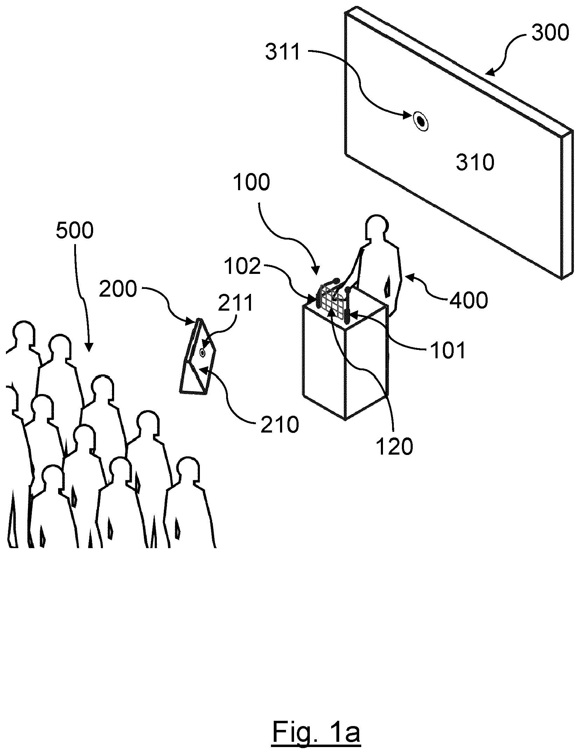

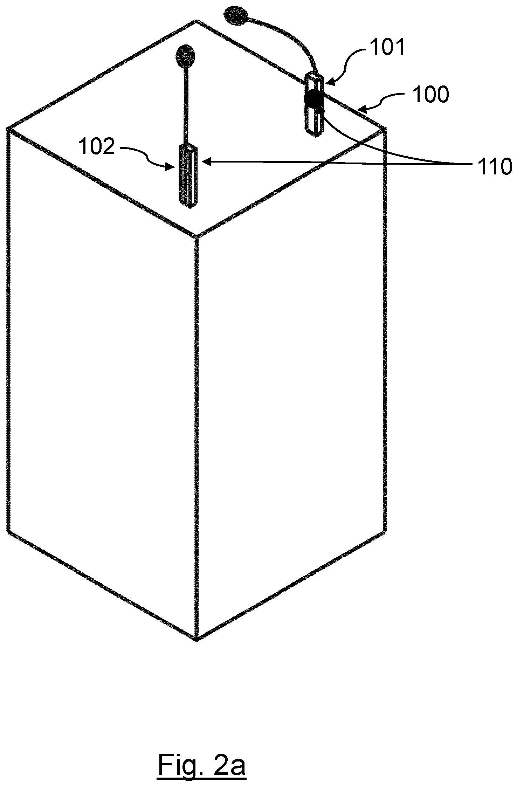

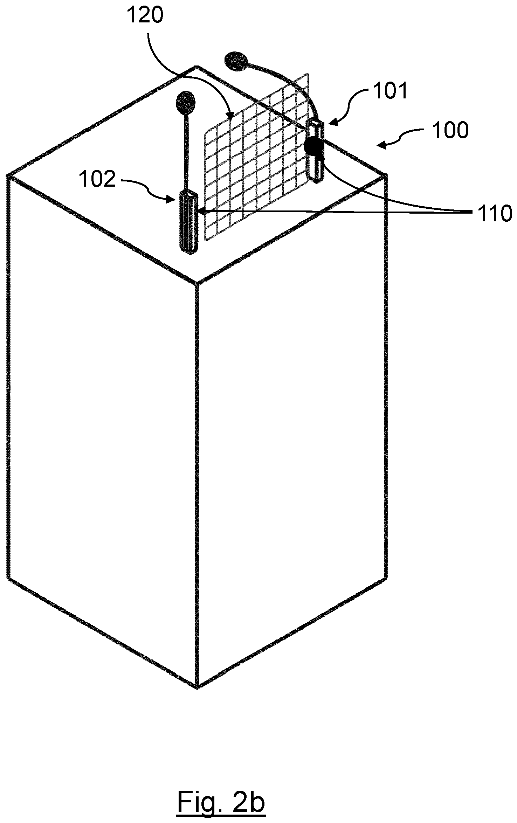

Figure 1a is a first schematic illustration of a touchless user interface control system showing an interface provision means 100 comprising two depth sensing devices 110 (shown in figures 2a and 2b) which are integrated or mounted facing each other and observing a spatial input area 120. The spatial input area 120 serves as a spatial user interface enabling a user person 400 to provide touchless user input to a first scene 210 displayed by a first display means 200. In particular, the user person 400 may provide touchless user input using an input object 410, such as one hand or finger. The spatial input area 120 is illustrated as a grid for the sake of comprehensibility. During touchless user interaction, the user person 400 may essentially face the first display means 200 such that the first scene 210 is visually perceptible by the user person 400.

The interface provision means 100 comprises an essentially vertical left tower 101 and an essentially vertical right tower 102, wherein the left and the right towers oppose each other such that the spatial input area 120 is located between the left tower 101 and the right tower 102.

Further, it is shown a second display means 300 displaying a second scene 310 which may at least partially correspond to the first scene 210 displayed by the first display means 200. The second display means 200, i.e., the second scene 210, is visually perceptible by at least one participant person 500, e.g., an audience of a plurality of persons. The user person 400 may, due to the user person's orientation facing the first display means 200, not see the second display means 300. In other words: the user person 400 may stand with the user person's back to the second display means 300 and may therefore see in front the first display means 200 and preferably also the at least one participant person 500.

As can be further seen in figure 1a, a pointer 211 is depicted on the first scene 210 displayed by the first display means 200. Further, a pointer 311 is depicted on the second scene 310 displayed by the second display means 300. The pointers 211, 311 may correspond to each other in such manner that they are each positioned at essentially the same place with respect to the first scene 210 and second scene 310 respectively. In other words: If, for example, the pointer 211 is in the upper left corner of the first scene 210, also the pointer 311 may be in the upper left corner of the second scene 310, wherein preferably the first and second scenes 210, 310 are at least partially the same.

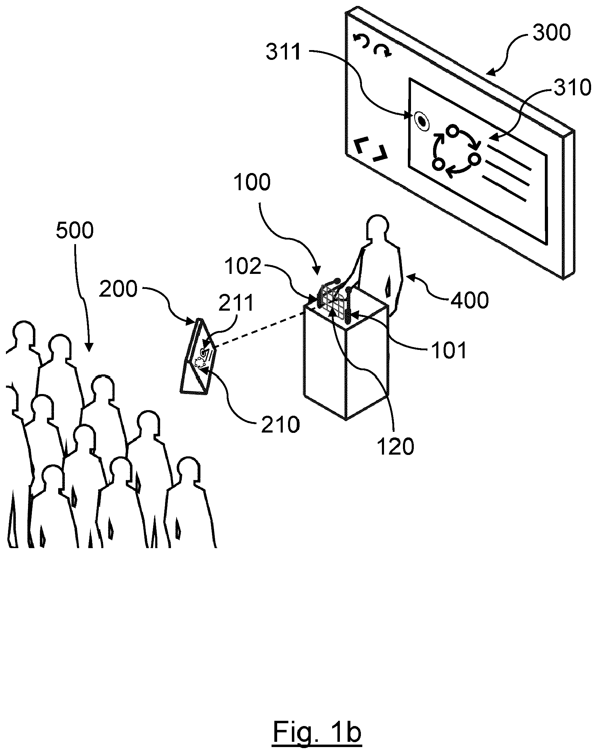

Figure 1b is a second schematic illustration of a touchless interface control system, similar to figure 1a. Compared to figure 1a, figure 1b shows a specific first scene 210 including content and control elements. As can be seen, also the second scene 310 includes the content in the same manner. The second scene 310 may in particular be a projection and/or stream of the first scene 210. Further, figure 2b shows a dashed line illustrating the projection of the input object 410, which is the user person's hand, causing generating control commands which cause displaying aforementioned hovering pointer 211 which is also displayed on the second scene 310 as a hovering pointer 311 as described above.

Figure 2a is a first schematic illustration of an interface provision means 100 including a left tower 101 and a right tower 102. Further, depth sensing devices 110 are depicted which are integrated in the right tower 101 and in the left tower 102.

Figure 2b is a second schematic illustration of an interface provision means 100 further including a visualization of the spatial input area 120. The spatial input area 120 is partially, at its left and right side, limited by the left and right towers 101, 102 in order to make its position recognizable for the user person 400.

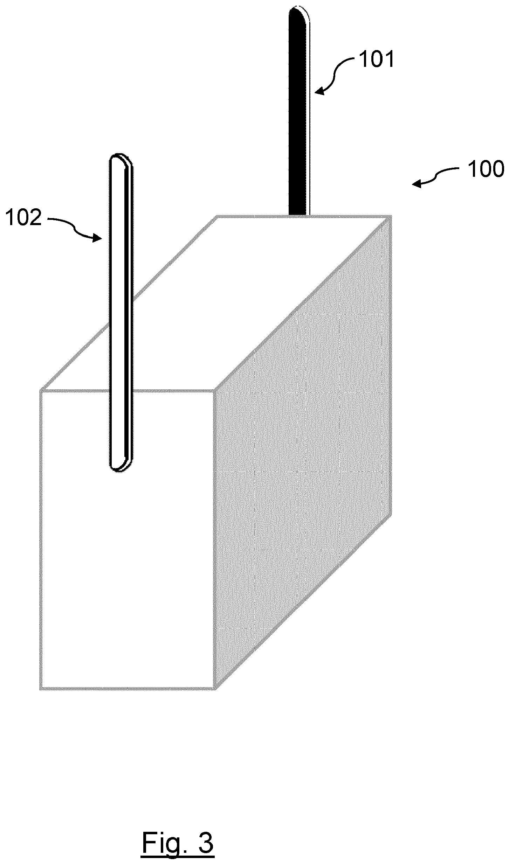

Figure 3 is a third schematic illustration of an interface provision means 100 having an alternative shape.

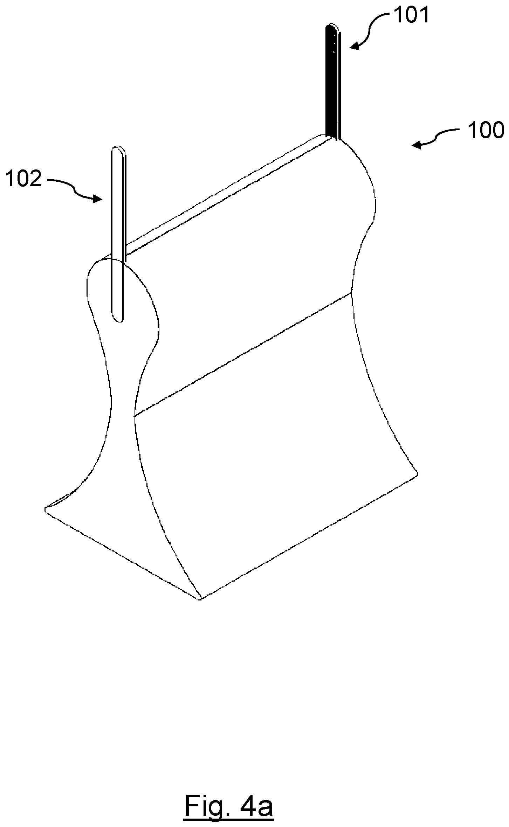

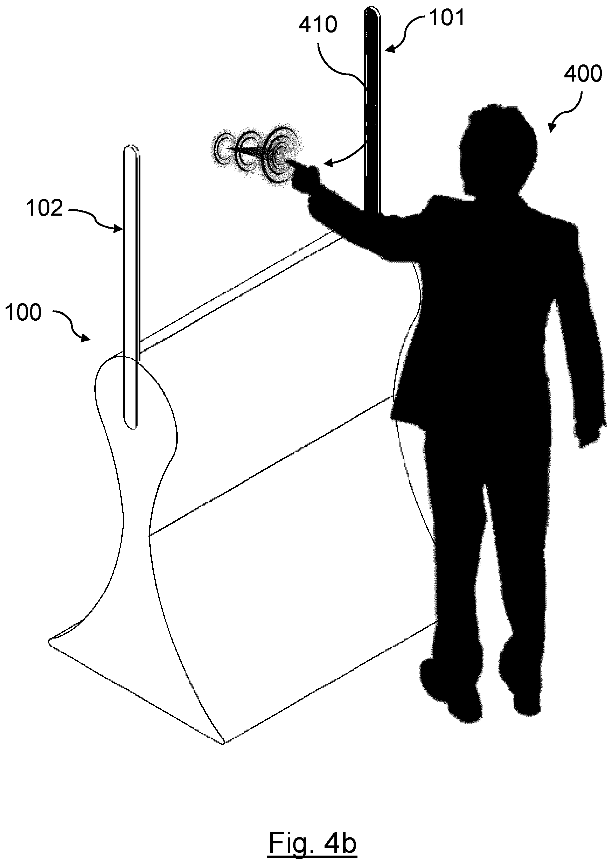

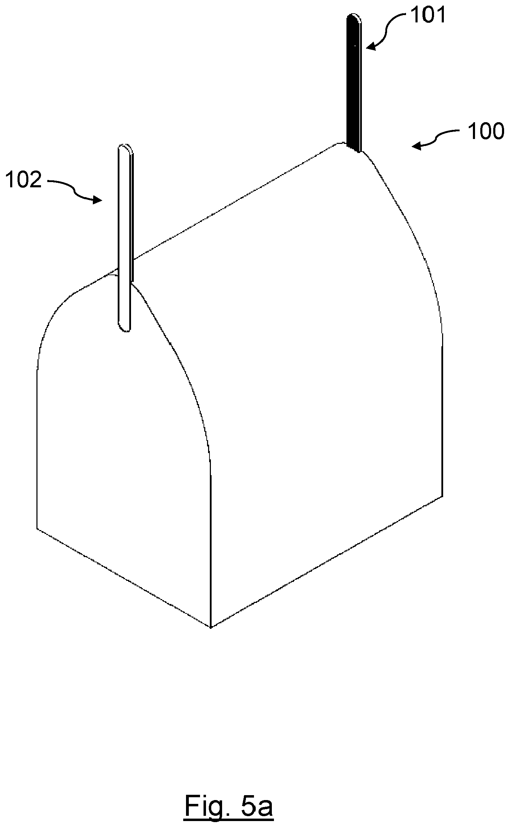

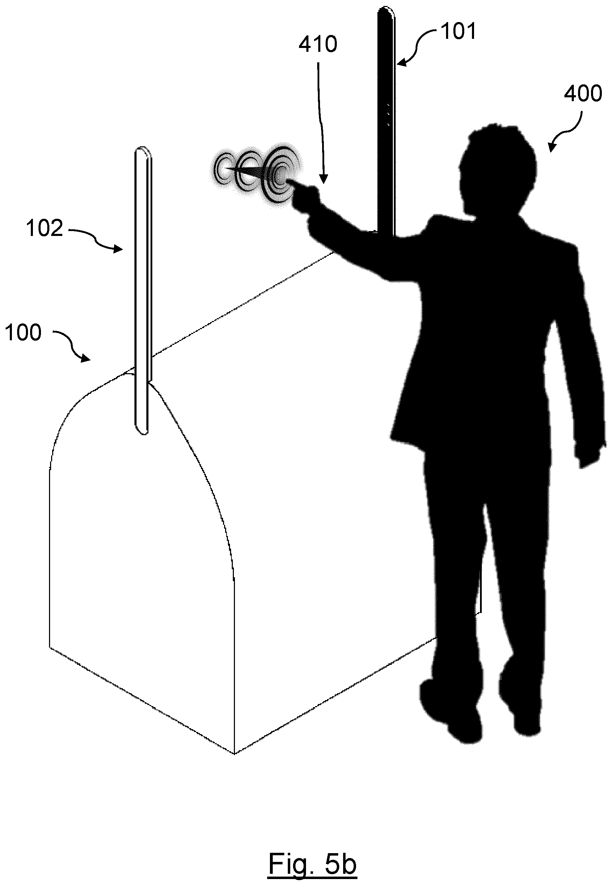

Figure 4a is a fourth schematic illustration of an interface provision means 100 having an alternative shape. Figure 4b, as a fifth schematic illustration of an interface provision means 100, additionally depicts a user person 400 providing touchless user input using the user person's hand 410. Similarly, Figure 5a is a sixth schematic illustration of an interface provision means 100 having an alternative shape while figure 5b, as a seventh schematic illustration of an interface provision means 100, additionally depicts a user person 400 providing touchless user input using the user person's hand 410.

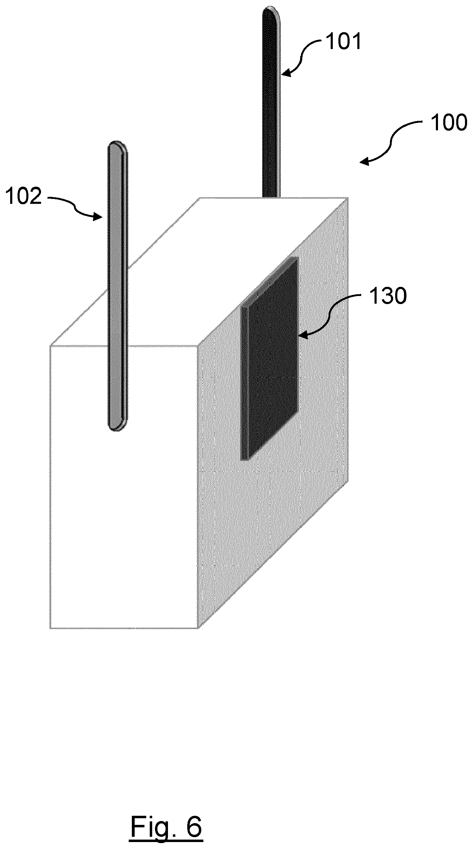

Figure 6 is an eighth schematic illustration of an interface provision means 100 further including a control unit 130 which is configured to process captured image data of the depth sensing device(s) 110 in order to generate control commands based on the captured touchless user input and modifying the displayed first and scenes 210, 310 in accordance with the control commands.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Some or all of the method steps may be executed by (or using) a hardware apparatus, such as a processor, a microprocessor, a programmable computer or an electronic circuit. Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments of the invention provide a data carrier having electronically readable control signals, which are capable of cooperating with a programmable computer system, such that one of the methods described herein is performed.

Generally, embodiments of the invention can be implemented as a computer program (product) with a program code, the program code being operative for performing one of the methods when the computer program product runs on a computer. The program code may, for example, be stored on a machine-readable carrier. Other embodiments comprise the computer program for performing one of the methods described herein, stored on a machine-readable carrier. In other words, an embodiment of the present invention is, therefore, a computer program having a program code for performing one of the methods described herein, when the computer program runs on a computer.

A further embodiment of the invention provides a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention provides a data stream or a sequence of signals representing the computer program for performing one of the methods described herein. The data stream or the sequence of signals may, for example, be configured to be transferred via a data communication connection, for example, via the internet.

A further embodiment of the invention provides a processing means, for example, a computer or a programmable logic device, configured to, or adapted to, perform one of the methods described herein.

A further embodiment of the invention provides a computer having installed thereon the computer program for performing one of the methods described herein.

A further embodiment of the invention provides an apparatus or a system configured to transfer (e.g., electronically or optically) a computer program for performing one of the methods described herein to a receiver. The receiver may, for example, be a computer, a mobile device, a memory device, or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

### REFERENCE SIGNS

- 100: interface provision means
- 101: left tower
- 102: right tower
- 110: depth sensing device
- 120: spatial input area
- 130: control unit
- 200: first display means
- 210: first scene
- 300: second display means
- 310: second scene
- 211, 311: pointer
- 400: user person
- 410: input object, e.g., hand
- 500: participant person(s)

## Claims

1. A computer-implemented touchless user interface control method, the method comprising:
displaying, using a first display means (200), a first scene (210) which is visually perceptible by a user person (400);
displaying, using a second display means (300), a second scene (310) which is visually perceptible by at least one participant person (500), wherein optionally the second scene (310) at least partially corresponds to the first scene (210);
providing, using an interface provision means (100), a spatial input area (120) serving as a spatial user interface enabling the user person (400) to provide touchless user input to the displayed first scene (210);
observing, using at least one depth sensing device (110), the spatial input area (120) and capturing the touchless user input provided by the user person (400); and
generating at least one control command based on the captured touchless user input and modifying the first scene (210) and second scene (310) in accordance with the at least one control command.

2. The computer-implemented method of claim 1, wherein modifying includes modifying the first scene (210) in accordance with the at least one control command, wherein the modifications applied to the first scene (210) are at least partially also applied to the second scene (310), and optionally wherein the first scene (210) and second scene (310) are modified correspondingly in accordance with the at least one control command, the first and second scene (210, 310) being at least partially identical.

3. The computer-implemented method of any one of the preceding claims, wherein the spatial input area (120), preferably being defined as a virtual plane defined in space, is mapped to the first scene (210) displayed by the first display means (200), wherein captured user input is mapped accordingly while modifying the first and second scene (210, 310).

4. The computer-implemented method of claim 3, wherein for modifying the second scene (310), the modification of the first scene (201) is mapped to the second scene (310).

5. The computer-implemented method of any one of the preceding claims, wherein the spatial input area (120) is or comprises a virtual plane defined in space which virtual plane may form a virtual touchpad which does not require physical touch during a user interaction.

6. The computer-implemented method of claim 5, wherein during a user interaction where touchless user input is captured which is provided by the user person (400) via an input object (410), preferably via a hand of the user person (400), the captured distance of the input object (410) with respect to the virtual plane and the position of the input object (410) relative to the plane and/or the movement of the input object (410) relative to the plane is processed and generating at least one control command is performed based thereon.

7. The computer-implemented method of any one of the preceding claims, wherein one or more of the following types of control commands may be generated based on user input:
hovering pointer commands causing modifying the first and second scene (210, 310) by displaying a hovering pointer (211, 311) which overlays the respective scene (210, 310) in a respective position, preferably wherein a captured user input is determined to be a hovering pointer command if the user person (400) points with at least a portion of the user person's hand within the spatial input area (120);
gesture input commands, such as click input commands, causing modifying the first and second scene (210, 310) in that said scenes change according to the gesture, preferably wherein a captured user input is determined to be a gesture input command if the user person (400) performs a gesture movement with the user person's hand within the spatial input area (120).

8. The computer-implemented method of any one of the preceding claims, wherein the position of the spatial input area (120) in space is at least partially made recognizable for the user person (400) through the interface provision means (100).

9. The computer-implemented method of any one of the preceding claims, wherein the at least one depth sensing device (110) is integrated in the interface provision means (100).

10. The computer-implemented method of any one of the preceding claims, wherein the interface provision means (100) is or comprises a physical framing having a shape that at least partially frames the spatial input area (120), optionally wherein the physical framing comprises an essentially vertical left tower (101) and an essentially vertical right tower (102), the left and the right tower (101, 102) opposing each other such that the spatial input area (120) is located between the left tower (101) and the right tower (102), wherein at least one depth sensing device (110) may be integrated in the left tower (101) and/or at least one depth sensing device (110) may be integrated in the right tower (102).

11. The computer-implemented method of any one of the preceding claims, wherein the interface provision means (100) comprises a projector, preferably a laser projector and/or a hologram projector, the projector emitting light at least partially being indicative of the location of the spatial input area (120).

12. The computer-implemented method of any one of the preceding claims, wherein the interface provision means (100) comprises an augmented reality device, preferably a wearable augmented reality device such as an augmented reality glasses, the augmented reality device providing an indication to the user person at least partially being indicative of the location of the spatial input area (120).

13. A touchless user interface control system, in particular for use in a method according to one of the preceding claims, comprising:
a first display means (200) being configured to display a first scene (210), the first display means (200) being arranged such that a user person (400) is able to visually percept the first scene (210);
at least one second display means (300) being configured to display a second scene (310), the at least on second display means (300) being arranged such that at least one participant person (500) is able to visually percept the second scene (310), preferably wherein the user person (400) is not able to see the second scene (310);
an interface provision means (100) configured to provide spatial input area (120) serving as a spatial user interface enabling the user person (400) to provide touchless user input to the displayed first and/or second scene (210, 310);
at least one depth sensing device (110), preferably mounted at or integrated in the interface provision means (100), being configured for observing a spatial input area (120) and capturing touchless user input performed by the user person (400);
optionally wherein the interface provision means (100) comprises an interface indication means being configured to provide an indication to the user person (400) at least partially being indicative of the location of the spatial input area (120), wherein the interface indication means preferably includes one or more of the following:
a physical framing having a shape that at least partially frames the spatial input area (120), preferably an essentially vertical left tower (101) and an essentially vertical right tower (102), wherein the left and the right tower (101, 102) oppose each other such that the spatial input area (120) is located between the left tower (101) and the right tower (102), preferably wherein in each of the towers (101, 102) at least one of the at least two depth sensing devices (110) may be mounted or integrated;
a projector, preferably a laser projector and/or a hologram projector, the projector emitting light at least partially being indicative of the location of the spatial input area (120),
an augmented reality device, preferably a wearable augmented reality device such as an augmented reality glasses, the augmented reality device providing an indication to the user person at least partially being indicative of the location of the spatial input area (120).

14. A system or data processing apparatus comprising means for carrying out the method of any one of claims 1-12.

15. A computer program or a computer-readable medium having stored thereon a computer program, the computer program comprising instructions which, when the program is executed by a computer, cause the computer to carry out the method of any one of claims 1-12.
